# EUROPEAN PATENT SPECIFICATION

(11) **EP 1 422 958 B1**
(45) Date of publication and mention of the grant of the patent: **22.08.2007**
(21) Application number: 03026642.3
(22) Date of filing: 19.11.2003
(51) Int. Cl.: H04Q 7/32

(54) **Permission token management system, permission token management method, program and recording medium**
Erlaubnistokenverwaltungssystem, dazugehöriges Verfahren, Programm und Speichermedium
Système d'administration des jetons de permission et procédé, programe et milieu d'enregistrement correspondants

(30) Priority: 20.11.2002 JP 2002336150
(43) Date of publication of application: 26.05.2004
(73) Proprietor: NEC CORPORATION, Tokyo (JP)
(72) Inventor: Nakayama, Yoshitaka, Minato-ku Tokyo (JP)
(74) Representative: Betten & Resch

(56) References cited:
- EP-A- 1 033 652
- EP-A- 1 217 850
- WO-A-01/18633

## Description

### BACKGROUND OF THE INVENTION

### 1. Field of the Invention

The present invention relates to a permission management technique in a terminal such as a mobile phone, and in particular, to a permission management technique which is effective at the time of downloading application programs and at the time of executing downloaded application programs.

### 2. Description of the Related Art

In recent years, mobile terminals such as mobile phones download application programs and perform a variety of processing using the downloaded application programs (see, for example, the Japanese Patent Application Laid-open No. 2002-140499 and the Japanese Patent Application Laid-open No. 2001-318996).

However, the aforementioned conventional art has the following problems since it only downloads application programs from servers in accordance with downloading manipulations performed by users. That is, there is a case that a permission (a function restricted for security purpose) for normally operating the downloaded application program is not installed in the mobile terminal. In such a case, it only wastes the communication cost for downloading the application program. Further, there is another case that the downloaded application program starts by automatically using a permission installed in the mobile terminal, so that the user may suffer damages. It should be noted that as permissions, data such as a telephone book or an address book related to the user's privacy is used.

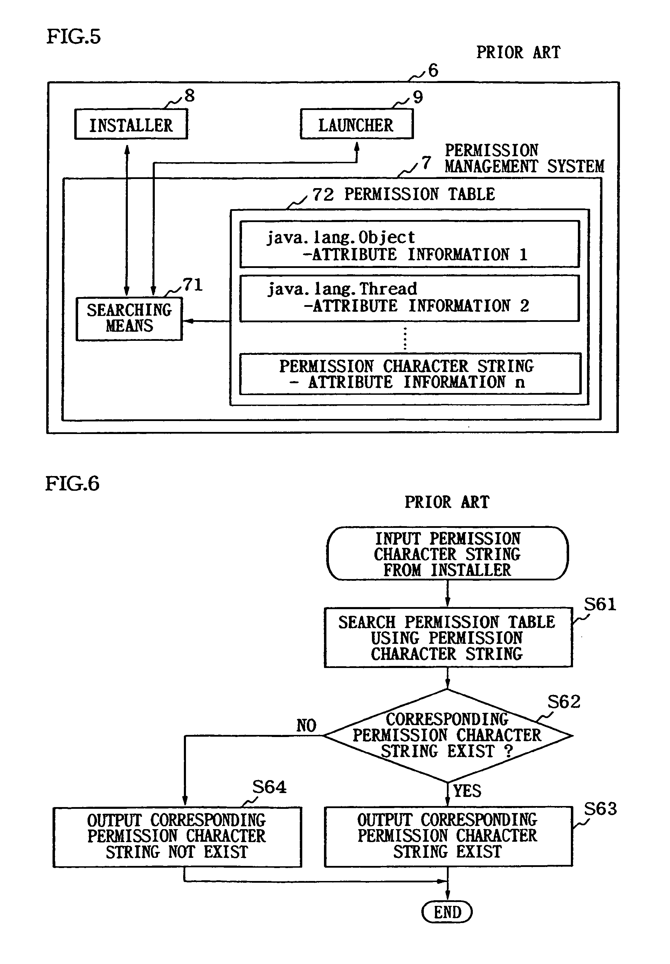

In order to solve these problems, a mobile terminal 6 may contain a permission management system 7, for example, as shown in Fig. 5.

The permission management system 7 includes a searching means 71 and a permission table 72.

The permission table 72 stores attribute information including permission character strings (such as java. lang. Object) indicating respective permissions installed in the mobile terminal 6, and conditions of use of the permissions (for example, identifiers of application programs capable of using the permissions).

When an application program is to be downloaded from a server (not shown), an installer 8, before downloading, obtains from the server a permission character string indicating a permission necessary for normally operating the application program. Then, the installer 8 inputs the permission character string obtained from the server into the permission management system 7.

When the permission character string is input from the installer 8, the searching means 71 in the permission management system 7 searches data stored in the permission table 72 according to the input permission character string, as shown in Fig. 6 (Step S61).

In a case that the corresponding permission character string exists in the permission table 72 (YES in Step S62), the searching means 71 informs the installer 8 that the corresponding permission character string exists in the permission table 72 (Step S63).

In contrast, in a case that the corresponding permission character string does not exist in the permission table 72 (NO in Step S62), the searching means 71 informs the installer 8 that the corresponding permission character string does not exist in the permission table 72 (Step S64).

The installer 8, when receives information from the permission management system 7 that the corresponding permission character string exists, downloads the application program from the server. When receives information from the permission management system 7 that the corresponding permission character string does not exist, the installer 8 does not download the application program. In such a case, the installer 8 informs the user that the permission for normally operating the application program is not installed.

Further, in a case that the application program downloaded from the server is to be executed at a launcher 9 by using the permission installed in the mobile terminal 6, the identifier of the application program to be executed at the launcher 9 and the permission character string indicating the permission to be used are input into the permission management system 7.

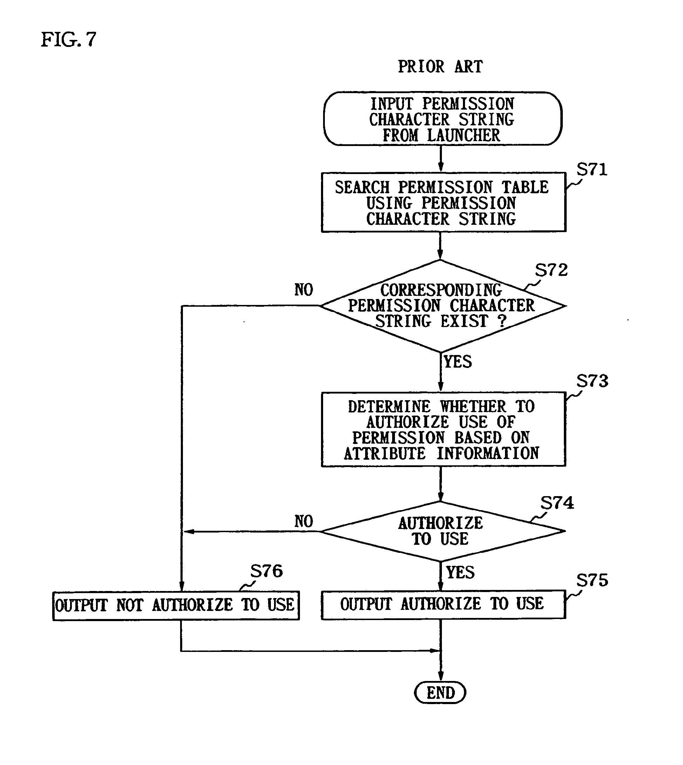

When the permission character string and the identifier are input from the launcher 9, the searching means 71 in the permission management system 7 searches data stored in the permission table 72 according to the input permission character string, as shown in Fig. 7 (Step S71).

In a case that the corresponding permission character string does not exist in the permission table 72 (NO in Step S72), the searching means 71 outputs an instruction of not authorizing the use to the launcher 9 (Step S76).

In contrast, in a case that the corresponding permission character string exists in the permission table 72 (YES in Step S72), the searching means 71 determines whether to authorize the use of the permission or not, according to the attribute information making a pair with the permission character string and the input identifier of the application program (Step S73).

When the searching means 71 determined to authorize the use (YES in Step S74), the searching means 71 outputs an instruction of authorizing the use to the launcher 9 (Step S75). When the searching means 71 determined not to authorize the use (NO in Step S74), the searching means 71 outputs an instruction of not authorizing the use to the launcher 9 (Step S76).

When an instruction of not authorizing the use is output from the permission management system 7, the launcher 9 informs it to the user. In contrast, when an instruction of authorizing the use is output from the permission management system 7, the launcher 9 allows the downloaded application program to execute processing using the permission.

By installing the permission management system 7 in the mobile terminal 6 as shown in Fig. 5, such inconveniences that an application program incapable of being normally operated on the mobile terminal 6 is downloaded, or a downloaded application program automatically uses a permission installed in the mobile terminal, can be solved.

The permission management system 7 shown in Fig. 5 determines whether a permission necessary for normally operating an application program intended to be downloaded is installed in the mobile terminal 6 or not, and also determines whether to authorize the downloaded application program to use the permission installed in the mobile terminal 6. When determining, the permission management system 7 searches the permission table using a permission character string having large number of characters. Therefore, there is a problem that the processing speed is low.

In EP-A-1 217 850, a method for permitting debugging and testing of software on an mobile communication device in a secure environment is disclosed. The mobile communication device has a device identifier and a root key of a public certificate authority. The method comprises sending a request for a development certificate to the public certificate authority, receiving the development certificate at a software developer, loading the signed software application onto the portable device, authenticating the development certificate with the public certificate authority and executing the software application only if the device identifier of the development certificate matches the device identifier of the mobile communication device and the development parameter is valid.

### SUMMARY OF THE INVENTION

It is therefore an object of the present invention to speed up a process of determining whether a permission necessary for normally operating an application program intended to be downloaded is installed in the terminal or not, and a process of determining whether to authorize the downloaded application program to use the permission installed in the terminal or not, by speeding up a searching process.

In order to achieve the aforementioned object, a permission token management method according to the present invention comprises the steps of: storing tokens which correspond respectively to a plurality of permissions installed in a terminal and are calculated by a predetermined conversion process performed to permission character strings indicating the permissions; when a permission character string indicating a specific permission is input, performing the predetermined conversion process to the permission character string; and searching a token table using a token which is a conversion result of the conversion process, and determining whether the token exists in the token table or not.

Further, a permission token management system for performing the permission token management method according to the present invention comprises: a token table for storing tokens which correspond respectively to a plurality of permissions installed in a terminal and are calculated by a predetermined conversion process performed to permission character strings indicating the permissions; a conversion means for, when a permission character string indicating a specific permission is input, performing the predetermined conversion process to the permission character string; and a searching means for searching the token table using a token which is a conversion result of the conversion means, and determining whether the token exists in the token table or not.

A program for causing a computer to execute each step described above may be recorded in a recording medium.

Further, it is possible to build a program as an electric signal for causing a computer to execute each step described above.

The aforementioned present invention is intended for speeding up a searching process. The present invention, in which this function is applied to downloading of application programs, may comprise, in order to perform in high speed a process of determining whether a permission necessary for normally operating an application program to be downloaded is installed in a terminal or not: a token table for storing tokens which correspond respectively to a plurality of permissions installed in a terminal and are calculated by a predetermined conversion process performed to permission character strings indicating the permissions; a search request/saving means for, when a permission character string indicating a permission necessary for normally operating an application program to be downloaded is input, outputting a search request including the permission character string; a conversion means for performing a conversion process to the permission character string included in the search request output from the search request/saving means, and outputting a token which is a conversion result; and a first searching means for searching the token table using the token output from the conversion means to thereby determine whether a permission required for normally operating the application program is installed in the terminal or not.

Further, the permission token management system of the present invention may comprise, in order to perform in high speed a process of determining whether to authorize a downloaded application to use a permission installed in a terminal or not: a token attribute information table in which, relating to each of a plurality of permissions installed in the terminal, a token of the permission and attribute information including conditions of use are registered in correspondence with each other; a permission database; a token obtaining means for, when the permission character string indicating the permission desired for use is output from the application program at the time of executing the application program, outputting a token obtaining request including the permission character string to the conversion means and receiving a token output from the conversion means responding to the token obtaining request; and a second searching means for determining whether to authorize the application program to use the permission or not, in accordance with the attribute information of the permission corresponding to the token, which is obtained by searching the permission database using the token received by the token obtaining means. The permission token management system may be so configured that the conversion means has a function of, responding to the token obtaining request from the token obtaining means, performing the predetermined conversion process to the permission character string which is being requested for obtaining the token, and outputting the conversion result to the token obtaining means, and the search request/saving means has a function of, when the permission necessary for normally operating the application program is determined by the first searching means to be installed in the terminal, obtaining the attribute information of the permission from the token attribute information table and registering the attribute information and the token of the permission in the permission database in correspondence with each other.

In the present invention, the conditions of use of the permission may include an identifier of the application program.

Further, in the present invention, the conversion means may have a function of obtaining a hash value corresponding to the permission character string.

Further, in the present invention, the token has less number of characters than that of the permission character string.

### (Operation of the invention)

In a token table within which searching is performed when determining a permission is installed in a terminal or not, there are stored tokens which correspond respectively to a plurality of permissions installed in the terminal and are calculated by a predetermined conversion process (for example, a process for converting a permission character string to a hash value) performed to permission character strings indicating the permissions. In a permission database within which searching is performed when determining whether to authorize the downloaded application program to use the permission or not, there are stored pairs of tokens indicating permissions and attribute information including conditions of use of the permissions.

When a permission character string indicating a permission to be searched is input, the permission character string is converted into a token such as a hash value. Then, using the converted token, the token table and the permission database are searched. It is therefore possible to perform the searching process in higher speed, comparing to the case of searching which uses the permission character string having more number of characters. Consequently, a process for determining whether a permission necessary for normally operating an application program to be downloaded is installed in the terminal or not, and a process for determining whether to authorize the downloaded application program to use the permission installed in the terminal or not, can be speeded up.

### BRIEF DESCRIPTION OF THE DRAWINGS

Fig. 1 is a block diagram showing an embodiment of the present invention;
Fig. 2 is a block diagram showing an exemplary structure of the permission token management system 10;
Fig. 3 is a flowchart showing an exemplary process of downloading an application program;
Fig. 4 is a flowchart showing an exemplary process of executing an application program;
Fig. 5 is a block diagram showing an exemplary structure of a permission management device which is devisable for solving problems in conventional art;
Fig. 6 is a flowchart showing an exemplary process for downloading an application program using the device shown in Fig. 5; and
Fig. 7 is a flowchart showing an exemplary process for executing an application program in the device shown in Fig. 5.

### PREFERRED EMBODIMENT OF THE PRESENT INVENTION

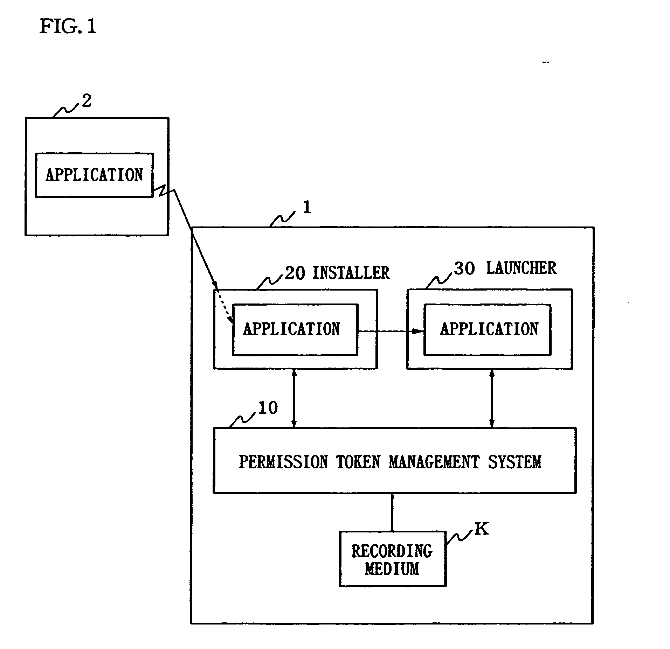

In Fig. 1, the reference numeral 1 indicates a terminal such as a mobile phone, and the reference numeral 2 indicates an application server to which the terminal 1 accesses. The application server 2 has a function of downloading an application program to the terminal 1 responding to a request from the terminal 1. As for this terminal, desk-type or notebook-type personal computers may be used, besides mobile phones. It should be noted that explanations will be given below with respect to a case of using a terminal such as a mobile phone as the terminal 1.

The terminal 1 comprises a permission token management system 10, an installer 20, a launcher 30, and a recording medium K.

The permission token management system 10 has a variety of functions. As for these functions, first, there is a function of determining, when a permission character string indicating a permission necessary for normally operating an application program intended to be downloaded from the installer 20 is input, whether the permission is installed in the terminal 1 or not. In addition, there is another function, of determining, when a permission character string indicating a permission desired to be used is input from an application program which is being executed in the launcher 30, whether to authorize the application program to use the permission or not, and the like.

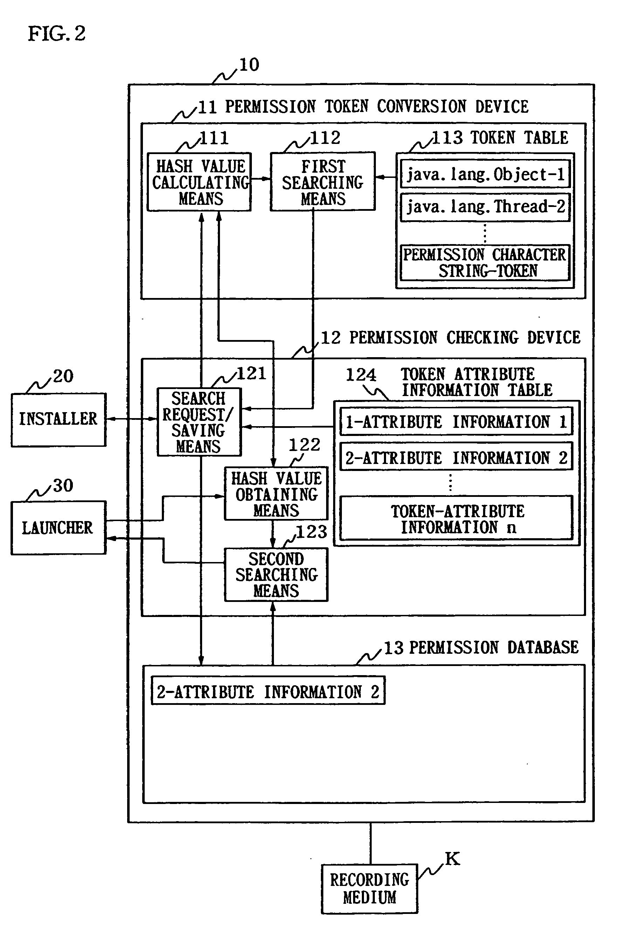

The permission token management system 10 including the aforementioned functions has the structure shown in Fig. 2.

As shown in Fig. 2, the permission token management system 10 comprises a permission token conversion device 11, a permission checking device 12, and a permission database 13.

The permission token conversion device 11 includes a hash value calculating means 111, a first searching means 112, and a token table 113. The permission checking device 12 includes a search request/saving means 121, a hash value obtaining means 122, a second searching means 123, and a token attribute information table 124.

The token table 113 stores permission character strings corresponding respectively to a plurality of permissions installed in the terminal 1, and tokens (having less number of characters than that of the permission character strings). Tokens corresponding to respective permission character strings are different, and in this embodiment, hash values corresponding to the permission character strings are set as tokens. It should be noted that a hash function used for calculating the tokens stored in the token table 113 and a hash function used for calculating hash values in the hash value calculating means 111 are the same. In the example shown in Fig. 2, a token of a permission indicated by a permission character string 'java. lang. Object' is shown as '1', a token of a permission indicated by a permission character string 'java. lang. Thread' is shown as '2'.

The token attribute information table 124 stores, with respect to each of a plurality of permissions installed in the terminal 1, the token of the permission and the attribute information including conditions for use in correspondence with each other. In the present embodiment, attribute information corresponding to a permission should include an identifier of an application program capable of using the permission as a condition for use.

The search requesting/saving means 121 has the following functions:
- prior to downloading an application program, when a permission character string indicating a permission necessary for normally operating the application program is input from the installer 20, a function of outputting a search request including the permission character string to the hash value calculating means 111;
- when such a search result that a token corresponding to the permission character string being requested for search exists is output from the first searching means 112, a function of outputting to the installer 20 an instruction to authorize downloading, obtaining from the token attribute information table 124 attribute information corresponding to the token, and storing in the permission database 13 the obtained attribute information and the token in correspondence with each other; and
- when such a search result that a token corresponding to the permission character string being requested for search does not exist is output from the first searching means 112, a function of outputting to the installer 20 an instruction not to authorize downloading.

The hash value obtaining means 122 has the following functions:
- when, from an application program being executed in the launcher 30, a permission character string indicating a permission desired to be used and an identifier of the application program is input, a function of outputting a request for obtaining a hash value including the permission character string to the hash value calculation means 111; and
- when data of the hash value is output from the hash value calculating means 111 responding to the request for obtaining the hash value, a function of outputting the hash value and the identifier of the application program to the second searching means 123.

The hash value calculating means 111 has the following functions:
- when a search request including a permission character string is transmitted from the search request/saving means 121, a function of calculating a hash value corresponding to the permission character string and outputting data of the hash value to the first searching means 112; and
- when a request for obtaining a hash value including a permission character string is transmitted from the hash value obtaining means 122, a function of calculating a hash value corresponding to the permission character string and outputting data of the hash value to the hash value obtaining means 122.

The first searching means 112 has the following functions:
- when data of a hash value is input from the hash value calculating means 111, a function of searching the token table 113 using the data of the hash value, and searching whether a token matching the hash value is stored in the token table 113 or not; and
- a function of outputting the search result to the search request/saving means 121.

The second searching means 123 has the following functions:
- when data of a hash value is input from the hash value obtaining means 122, a function of searching the permission database 13 using the data of the hash value, and searching whether a token matching the hash value is stored in the permission database 13 or not;
- in a case that the token matching the hash value used for searching is stored in the permission database 13, a function of determining, according to attribute information making a pair with the token and an identifier of an application program, whether to authorize the application program to use the permission or not, and outputting an instruction of the determined result to the launcher 30; and
- in a case that the token matching the hash value used for searching is not stored in the permission database 13, a function of outputting an instruction of not authorizing the use of the permission to the launcher 30.

The recording medium K comprises a disc, a semiconductor memory, and other recording media. The recording medium K has a program for functioning the CPU of the micon (computer) installed in the terminal 1 as the permission token management system 10.

The program kept in the recording medium K is read out by the CPU of the micon (computer) installed in the terminal 1, and by controlling the operation of the CPU with the program, functions as the hash value calculating means 111, the first searching means 112, the search request/saving means 121, the hash value obtaining means 122, and the second searching means 123 are executed.

### (Operations)

Next, operations of the present embodiment will be explained in detail.

First, an operation when downloading an application program will be explained in detail.

When downloading of an application program is instructed by a user of the terminal 1, the installer 20 obtains from the application server 2, prior to downloading the application program, a permission character string indicating a permission necessary for normally operating the application program. Then, the installer 20 inputs the permission character string obtained from the application server 2 into the permission token management system 10.

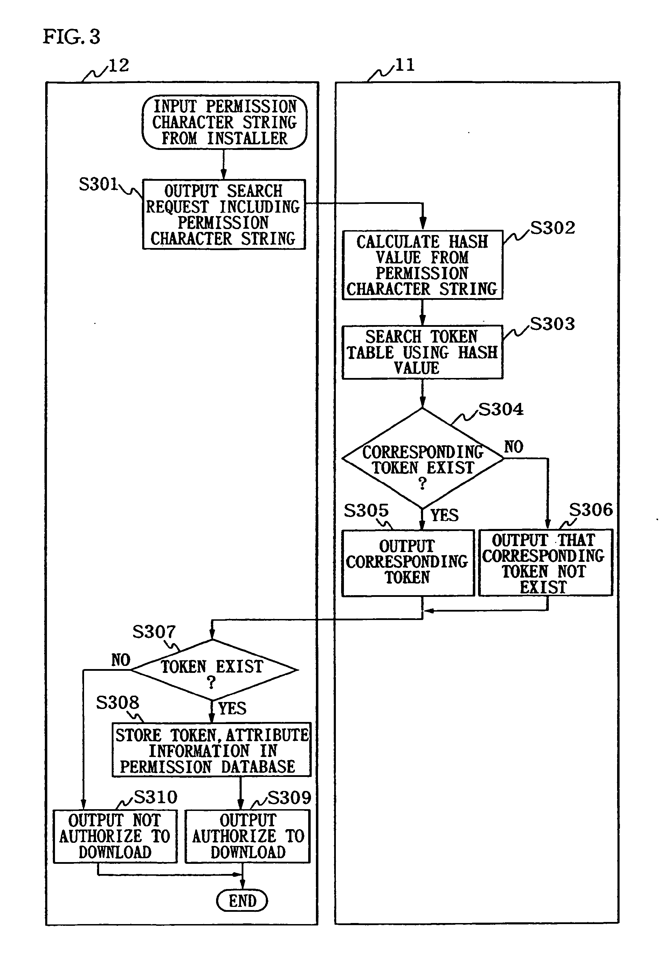

When the permission character string is input from the installer 20, the search request/saving means 121 in the permission token management system 10 outputs a search request including the permission character string to the hash value calculating means 111 (Fig. 3, Step S301).

When the search request is input, the hash value calculating means 111 calculates a hash value corresponding to the permission character string being requested for search using the predetermined hash function, and outputs data of the calculated hash value to the first searching means 112 (Step S302).

The first searching means 112 searches within the token table 113 using the data of the hash value input from the hash value calculating means 111 (Step S303).

In a case that a token matching the hash value input from the hash value calculating means 111 is stored in the token table 113 (YES in Step S304), the corresponding token (same value as the hash value) is output to the search request/saving means 121 (Step S305).

In contrast, in a case that a token matching the hash value input from the hash value calculating means 111 is not stored in the token table 113 (NO in Step S304), an instruction indicating that the corresponding token does not exist is output to the search request/saving means 121 (Step S306)

When the instruction indicating that the token does not exist is input from the first searching means 112 (NO in Step S307), the search request/saving means 121 outputs an instruction of not authorizing the download to the installer 20 (Step S310). With this instruction, the installer 20 invalidates the downloading instruction from the user, and not performing downloading of the application program. Further, the installer 20 indicates on an indicator, not shown in the Figures, that the application program is not to be downloaded since the permission necessary for normally operating the application program instructed to be downloaded is not installed in the terminal 1.

In contrast, when the token is input from the first searching means 112 (YES in Step S307), the search request/saving means 121 obtains from the token attribute information table 124 attribute information making a pair with the token stored in it, and stores the pair of obtained attribute information and the token in the permission database 13 (Step S308). For example, in a case that the token '2' is output from the first searching means 112, the search request/saving means 121 obtains from the token attribute information table 124 'attribute information 2' making a pair with the token '2', and stores the pair of the token '2' and the 'attribute information 2' in the permission database 13.

Then, the search request/saving means 121 outputs to the installer 20 an instruction to authorize downloading (Step S309). With this instruction, the installer 20 downloads the application program instructed by the user from the application server 2, and installs it in the terminal 1.

Next, an operation when executing the application program downloaded from the application server 2 in the manner as described above will be explained.

An application program downloaded form the application server 2 and executed on the launcher 30, when using a permission installed in the terminal 1, outputs a permission character string indicating the permission to be used and an identifier of the application program itself.

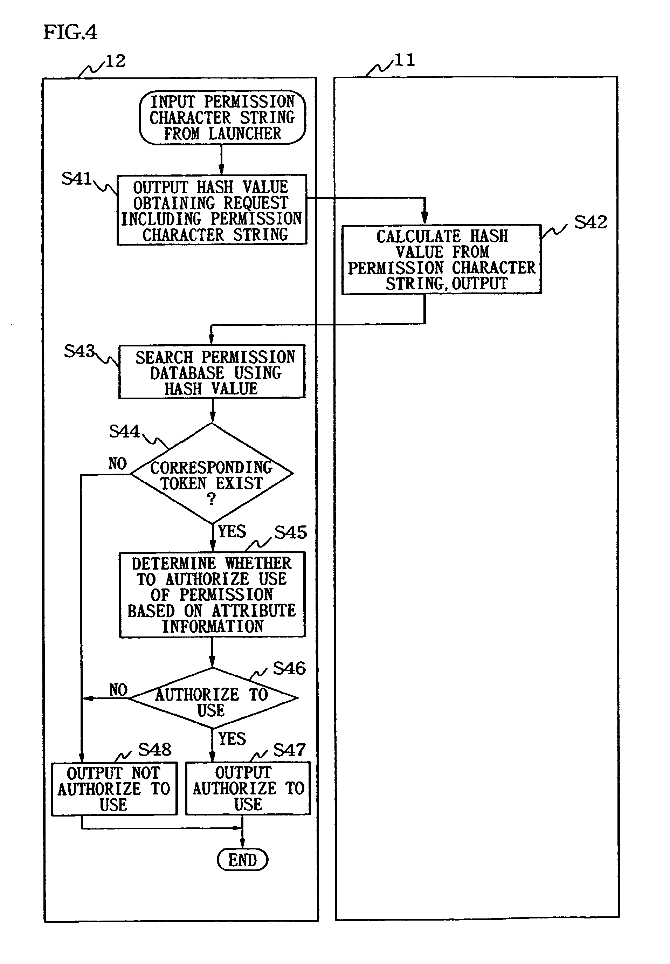

When the permission character string and the identifier of the application program are input from the launcher 30, the hash value obtaining means 122 in the permission token management system 10 outputs a request for obtaining a hash value including the permission character string to the hash value calculating means 111 (Fig. 4, Step S41).

When receiving the request for obtaining the hash value, the hash value calculating means 111 calculates, using the predetermined hash function, the hash value of the permission character string being requested for obtaining the hash value, and outputs data of the calculated hash value to the hash value obtaining means 122 (Step S42). When the data of the hash value is input, the hash value obtaining means 122 outputs the hash value and the identifier of the application program to the second searching means 123.

The second searching means 123 searches the permission database 13 using the data of the hash value input from the hash value obtaining means 122 (Step S43).

In a case that the token matching the hash value is not found (NO in Step S44), the second searching means 123 outputs an instruction not to authorize the use of the permission to the launcher 30 (Step S48).

In contrast, in a case that the token matching the hash value is found (YES in Step S44), the second searching means 123 determines whether to authorize the use of the permission or not, according to the contents of the attribute information making a pair with the token and the identifier of the application program (Step S45). That is, since the attribute information includes the identifier of the application program to be authorized to use the permission, the second searching means 123 determines whether to authorize the use or not, according to the fact whether the attribute information includes the same identifier as the identifier of the application program requesting the use of the permission.

If determined to authorize using the permission (YES in Step S46), the second searching means 123 outputs an instruction to authorize the use to the launcher 30 (Step S47). If determined not to authorize the use of the permission (NO in Step 46), the second searching step 123 outputs an instruction not to authorize the use to the launcher 30 (Step S48).

When an instruction not to authorize the use is input, the launcher 30 stops the application program being executed. When an instruction to authorize the use is input, the launcher 30 allows the application program to perform processing using the permission.

In the aforementioned embodiment, although the token table 113 stores pairs of permission character strings and tokens, it may only store tokens. However, by storing pairs of permission character strings and tokens as the embodiment, it is possible to know immediately what kinds of permissions are installed in the terminal 1 by referring to the contents of the token table 113. Further, although identifiers of application programs are set as conditions for use included in the attribute information in the aforementioned embodiment, security level information or information about application program providers may be acceptable.

According to another embodiment, a token table stores tokens corresponding respectively to permissions installed in a terminal. Prior to downloading an application program (AP), when a permission character string necessary for normally operating an AP intended to be downloaded is input from an installer, a hash value calculating means obtains a hash value of the permission character string, and a searching means searches the token table using the hash value. If a token matching the hash value exists, an instruction to authorize the download is output, and if it does not exist, an instruction not to authorize the download is output.

### (Effects of the Invention)

As described above, the present invention has the following effects.

A first effect is to speed up a searching process. The reasons are as follows. That is, in the token table and the permission database within which searching is performed, tokens such as hash values are installed instead or permission character strings. when a permission character string indicating a permission to be searched is input, the permission character string is converted into a token such as a hash value. Then, using the converted token, the token table and the permission database is searched.

A second effect is to speed up a process of determining whether a permission necessary for normally operating an application program intended to be downloaded is installed in a terminal or not. The reason is that searching within the token table can be performed with high speed.

A third effect is to speed up a process of determining whether to authorize a downloaded application program to use a permission installed in the terminal or not. The reason is that searching within the permission database can be performed with high speed.

A forth effect is to reduce memory utilization. The reason is that tokens such as hash values having less volume of data are stored instead of permission character strings.

## Claims

1. A permission token management system (10) comprising:
a token table (113) for storing tokens which correspond respectively to a plurality of permissions installed in a mobile terminal and are calculated by a predetermined conversion process performed to permission character strings indicating the permissions;
conversion means for, when a permission character string indicating a specific permission is input, performing the predetermined conversion process to the permission character string; and
first searching means (112) for searching the token table using a token which is a conversion result of the conversion means, and determining whether the token exists in the token table or not.

2. The permission token management system as claimed in claim 1, further comprising:
search request/saving means (121) for, when the permission character string indicating a permission necessary for normally operating an application program intended to be downloaded is input, outputting a search request including the permission character string;
wherein said conversion means is further adapted to perform the predetermined conversion process to the permission character string included in the search request output from the search request/saving means, and
said first searching means is further adapted to determine whether a permission necessary for normally operating the application program is installed in the terminal or not when determining whether the token exists in the token table or not.

3. The permission token management system as claimed in claim 2, further comprising:
a token attribute information table (124) within which, relating to each of the plurality of permissions installed in the mobile terminal, a token of the permission and attribute information including conditions of use are registered in correspondence with each other;
a permission database (13);
token obtaining means for, when the permission character string is output from an application program at the time of executing said application program, outputting a token obtaining request including the permission character string to the conversion means, and receiving a token output from the conversion means responding to the token obtaining request; and
second searching means (123) for determining whether to authorize the application program to use the permission or not, in accordance with the attribute information of the permission which corresponds to the token and is obtained by searching the permission database using the token received by the token obtaining means; wherein
the conversion means has a function of, responding to the token obtaining request from the token obtaining means, performing the predetermined conversion process to the permission character string being requested for obtaining the token, and outputting a conversion result to the token obtaining means, and
the search request/saving means has a function of, when the permission necessary for normally operating the application program is determined by the first searching means to be installed in the terminal, obtaining the attribute information of the permission from the token attribute information table, and registering in the permission database the attribute information and the token of the permission in correspondence with each other.

4. The permission token management system as claimed in claim 3, wherein the conditions of use of the permission include an identifier of the application program.

5. The permission token management system as claimed in claims 1 to 4, wherein the conversion means has a function of obtaining a hash value corresponding to a permission character string.

6. The permission token management system as claimed in claims 1 to 4, wherein the token has less number of characters than that of the permission character string.

7. A permission token management method comprising the steps of:
storing tokens which correspond respectively to a plurality of permissions installed in a mobile terminal and are calculated by a predetermined conversion process performed to permission character strings indicating the permissions;
when a permission character string indicating a specific permission is input, performing the predetermined conversion process to the permission character string; and
searching a token table (S303) using a token which is a conversion result of the conversion process, and determining (S304) whether the token exists in the token table or not.

8. The permission token management method as claimed in claim 7, wherein when said permission character string indicating a permission necessary for normally operating an application program intended to be downloaded is input, outputting (S301) a search request including the permission character string; and
wherein said step of performing the predetermined conversion process to the permission character string is applied to the permission character string included in the search request; and
by using the token, determining whether a permission necessary for normally operating the application program is installed in the terminal or not when determining whether the token exists in the token table or not.

9. A recording medium into which a program for causing a computer to execute each step as claimed in claim 7 or 8 is recorded.

10. A program comprising a program code which, when executed on a computer, enables the computer for carrying out a method as claimed in claim 7 or 8.

## Patentansprüche

1. Berechtigungs-Token-Managementsystem (10), das umfasst:
eine Token-Tabelle (113) zum Speichern von Tokens, die einer entsprechenden Mehrzahl von in einem mobilen Endgerät installierten Berechtigungen entsprechen und durch einen vorgegebenen Umsetzungsprozess berechnet werden, der an Berechtigungs-Zeichenstrings, die die Berechtigungen angeben, ausgeführt wird;
eine Umsetzungseinrichtung, um dann, wenn ein eine spezifische Berechtigung angebender Berechtigungs-Zeichenstring eingegeben wird, den vorgegebenen Umsetzungsprozess an dem Berechtigungs-Zeichenstring auszuführen; und
erste Suchmittel (112) zum Durchsuchen der Token-Tabelle unter Verwendung eines Tokens, das ein Umsetzungsergebnis der Umsetzungseinrichtung ist, und zum Bestimmen, ob das Token in der Token-Tabelle vorhanden ist oder nicht.

2. Berechtigungs-Token-Managementsystem nach Anspruch 1, das ferner umfasst:
eine Suchanforderungs-/Sicherungseinrichtung (121), um dann, wenn ein Berechtigungs-Zeichenstring eingegeben wird, der eine Berechtigung angibt, die zum normalen Betreiben eines herunterzuladenden Anwendungsprogramms erforderlich ist, eine Suchanforderung, die den Berechtigungs-Zeichenstring enthält, auszugeben;
wobei die Umsetzungseinrichtung ferner so beschaffen ist, dass sie den vorgegebenen Umsetzungsprozess an dem Berechtigungs-Zeichenstring, der in der Suchanforderung enthalten ist, die von der Suchanforderungs-/Sicherungseinrichtung ausgegeben wird, ausführt; und
die erste Sucheinrichtung ferner so beschaffen ist, dass sie bestimmt, ob eine Berechtigung, die zum normalen Betreiben des Anwendungsprogramms notwendig ist, in dem Endgerät installiert ist oder nicht, wenn bestimmt wird, ob das Token in der Token-Tabelle vorhanden ist oder nicht.

3. Berechtigungs-Token-Managementsystem nach Anspruch 2, das ferner umfasst:
eine Token-Attribut-Informationstabelle (124), in der in Bezug auf jede der mehreren in dem mobilen Endgerät installierten Berechtigungen ein Berechtigungs-Token sowie Attributinformationen, die Verwendungsbedingungen enthalten, in gegenseitiger Entsprechung eingetragen sind;
eine Berechtigungs-Datenbank (13);
eine Token-Gewinnungseinrichtung, um dann, wenn der Berechtigungs-Zeichenstring von einem Anwendungsprogramm zum Zeitpunkt der Ausführung des Anwendungsprogramms ausgegeben wird, eine Token-Gewinnungsanforderung, die den Berechtigungs-Zeichenstring enthält, zu der Umsetzungseinrichtung auszugeben und um ein von der Umsetzungseinrichtung in Reaktion auf die Token-Gewinnungsanforderung ausgegebenes Token zu empfangen; und
eine zweite Sucheinrichtung (123) zum Bestimmen, ob das Anwendungsprogramm für die Verwendung der Berechtigung berechtigt werden soll oder nicht, in Übereinstimmung mit den Attributinformationen der Berechtigung, die dem Token entspricht und durch Durchsuchen der Berechtigungs-Datenbank unter Verwendung des durch die Tokengewinnungseinrichtung empfangenen Tokens erhalten wird; wobei
die Umsetzungseinrichtung eine Funktion besitzt, um in Reaktion auf die Token-Gewinnungsanforderung von der Token-Gewinnungseinrichtung den vorgegebenen Umsetzungsprozess an dem Berechtigungs-Zeichenstring, der für die Gewinnung des Tokens erforderlich ist, auszuführen und um ein Umsetzungsergebnis an die Token-Gewinnungseinrichtung auszugeben; und
die Suchanforderungs-/Sicherungseinrichtung eine Funktion besitzt, um dann, wenn durch die erste Sucheinrichtung bestimmt wird, dass die zum normalen Betreiben des Anwendungsprogramms notwendige Berechtigung in dem Endgerät zu installieren ist, die Attributinformationen der Berechtigung aus der Token-Attribut-Informationstabelle zu gewinnen und um die Attributinformationen und das Token der Berechtigung in gegenseitiger Entsprechung in die Berechtigungs-Datenbank einzutragen.

4. Berechtigungs-Token-Managementsystem nach Anspruch 3, wobei die Bedingungen für die Verwendung der Berechtigung einen Identifizierer des Anwendungsprogramms enthalten.

5. Berechtigungs-Token-Managementsystem nach den Ansprüchen 1 bis 4, wobei die Umsetzungseinrichtung eine Funktion besitzt, um einen Hash-Wert, der einem Berechtigungs-Zeichenstring entspricht, zu erhalten.

6. Berechtigungs-Token-Managementsystem nach den Ansprüchen 1 bis 4, wobei das Token eine geringere Anzahl von Zeichen als der Berechtigungs-Zeichenstring besitzt.

7. Berechtigungs-Token-Managementverfahren, das die folgenden Schritte umfasst:
Speichern von Tokens, die einer entsprechenden Mehrzahl von in einem mobilen Endgerät installierten Berechtigungen entsprechen und durch einen vorgegebenen Umsetzungsprozess, der an Berechtigungs-Zeichenstrings, die Berechtigungen angeben, ausgeführt wird, berechnet werden;
Ausführen des vorgegebenen Umsetzungsprozesses an einem Berechtigungs-Zeichenstring, wenn dieser Berechtigungs-Zeichenstring die Eingabe einer spezifischen Berechtigung angibt; und
Durchsuchen einer Token-Tabelle (S303) unter Verwendung eines Tokens, das ein Umsetzungsergebnis des Umsetzungsprozesses ist, und Bestimmen (S304), ob das Token in der Token-Tabelle vorhanden ist oder nicht.

8. Berechtigungs-Token-Managementverfahren nach Anspruch 7,
wobei dann, wenn der Berechtigungs-Zeichenstring, der eine zum normalen Betreiben eines herunterzuladenden Anwendungsprogramms notwendige Berechtigung angibt, eingegeben wird, eine Suchanforderung, die den Berechtigungs-Zeichenstring enthält, ausgegeben wird (S301); und
wobei der Schritt des Ausführens des vorgegebenen Umsetzungsprozesses an dem Berechtigungs-Zeichenstring auf den Berechtigungs-Zeichenstring angewendet wird, der in der Suchanforderung enthalten ist; und
Bestimmen unter Verwendung des Tokens, ob eine zum normalen Betreiben des Anwendungsprogramms notwendige Berechtigung in dem Endgerät installiert ist oder nicht, wenn bestimmt wird, ob das Token in der Token-Tabelle vorhanden ist oder nicht.

9. Aufzeichnungsmedium, in das ein Programm aufgezeichnet ist, um einen Computer dazu zu veranlassen, jeden Schritt nach Anspruch 7 oder 8 auszuführen.

10. Programm, das Programmcode enthält, der, wenn er auf einem Computer ausgeführt wird, dem Computer ermöglicht, ein Verfahren nach Anspruch 7 oder 8 auszuführen.

## Revendications

1. Système d'administration des jetons de permission (10) **caractérisé en ce qu'**il comprend :
une table de jetons (113) destinée à stocker des jetons qui correspondent respectivement à une pluralité de permissions installées dans un terminal mobile et qui sont calculés par un processus de conversion prédéterminé exécuté sur des chaînes de caractères de permission indiquant les permissions ;
un moyen de conversion destiné, lorsqu'une chaîne de caractères de permission indiquant une permission spécifique est entrée, à exécuter le processus de conversion prédéterminé sur la chaîne de caractères de permission ; et
un premier moyen de recherche (112) destiné à effectuer des recherches dans la table de jetons en utilisant un jeton qui est un résultat de conversion du moyen de conversion et à déterminer si le jeton existe ou non dans la table de jetons.

2. Système d'administration des jetons de permission selon la revendication 1, **caractérisé en ce qu'**il comprend en outre :
un moyen de demande/sauvegarde de recherche (121) destiné, lorsque la chaîne de caractères de permission indiquant une permission nécessaire pour faire fonctionner de manière normale un programme d'application destiné à être téléchargé est entrée, à délivrer en sortie une demande de recherche comprenant la chaîne de caractères de permission ;
**caractérisé en ce que** ledit moyen de conversion est en outre adapté pour exécuter le processus de conversion prédéterminé sur la chaîne de caractères de permission comprise dans la demande de recherche délivrée en sortie depuis le moyen de demande/sauvegarde de recherche; et
ledit premier moyen de recherche est en outre adapté pour déterminer si une permission nécessaire pour faire fonctionner de manière normale le programme d'application est installée ou non dans le terminal lorsqu'il détermine si le jeton existe ou non dans la table de jetons.

3. Système d'administration des jetons de permission selon la revendication 2, **caractérisé en ce qu'**il comprend en outre :
une table des informations d'attributs des jetons (124) dans laquelle, correspondant à chacun parmi la pluralité de permissions installées dans le terminal mobile, un jeton de la permission et des informations d'attributs comprenant des conditions d'utilisation sont enregistrés en correspondance mutuelle ;
une base de données de permissions (13) ;
un moyen d'obtention des jetons destiné, lorsque la chaîne de caractères de permission est délivrée en sortie depuis un programme d'application au moment d'exécuter ledit programme d'application, à délivrer en sortie une demande d'obtention des jetons comprenant la chaîne de caractères de permission vers le moyen de conversion et à recevoir un jeton délivré en sortie depuis le moyen de conversion répondant à la demande d'obtention des jetons ; et
un deuxième moyen de recherche (123) destiné à déterminer si le programme d'application est autorisé ou non à utiliser la permission, conformément aux informations d'attributs de la permission qui correspondent au jeton et qui sont obtenues en effectuant des recherches dans la base de données de permissions en utilisant le jeton reçu par le moyen d'obtention des jetons ; **caractérisé en ce que**
le moyen de conversion a pour fonction, de répondre à la demande d'obtention des jetons provenant du moyen d'obtention des jetons, d'exécuter le processus de conversion prédéterminé sur la chaîne de caractères de permission demandée pour l'obtention du jeton et de délivrer en sortie un résultat de conversion vers le moyen d'obtention des jetons, et
le moyen de demande/sauvegarde de recherche a pour fonction, lorsque la permission nécessaire pour faire fonctionner de manière normale le programme d'application est déterminée par le premier moyen de recherche à installer dans le terminal, d'obtenir les informations d'attributs de la permission à partir de la table des informations d'attributs des jetons et d'enregistrer dans la base de données de permissions les informations d'attributs et le jeton de la permission en correspondance mutuelle.

4. Système d'administration des jetons de permission selon la revendication 3, **caractérisé en ce que** les conditions d'utilisation de la permission comprennent un identifiant du programme d'application.

5. Système d'administration des jetons de permission selon les revendications 1 à 4, **caractérisé en ce que** le moyen de conversion a pour fonction d'obtenir une valeur de hachage correspondant à une chaîne de caractères de permission.

6. Système d'administration des jetons de permission selon les revendications 1 à 4, **caractérisé en ce que** le jeton comporte un nombre de caractères inférieur à celui de la chaîne de caractères de permission.

7. Procédé d'administration des jetons de permission **caractérisé par** les étapes consistant à :
stocker des jetons qui correspondent respectivement à une pluralité de permissions installées dans un terminal mobile et qui sont calculés par un processus de conversion prédéterminé exécuté sur les chaînes de caractères de permission indiquant les permissions ;
lorsqu'une chaîne de caractères de permission indiquant une permission spécifique est entrée, à exécuter le processus de conversion prédéterminé sur la chaîne de caractères de permission ; et
à effectuer des recherches dans une table de jetons (S303) en utilisant un jeton qui est un résultat de conversion du processus de conversion et à déterminer (S304) si le jeton existe ou non dans la table de jetons.

8. Procédé d'administration des jetons de permission selon la revendication 7,
**caractérisé**, lorsque ladite chaîne de caractères de permission indiquant une permission nécessaire pour faire fonctionner de manière normale un programme d'application destiné à être téléchargé est entrée, en ce qu'il délivre en sortie (S301) une demande de recherche comprenant la chaîne de caractères de permission ; et
**caractérisé en ce que** ladite étape consistant à exécuter le processus de conversion prédéterminé sur la chaîne de caractères de permission est appliquée à la chaîne de caractères de permission comprise dans la demande de recherche; et
en utilisant le jeton, **en ce qu'**il détermine si une permission nécessaire pour faire fonctionner de manière normale le programme d'application est installée ou non dans le terminal lorsqu'il détermine si le jeton existe ou non dans la table de jetons.

9. Moyen d'enregistrement **caractérisé en ce qu'**un programme permettant à un ordinateur d'exécuter chaque étape selon la revendication 7 ou 8 est enregistré.

10. Programme comprenant un code de programme qui, lorsqu'il est exécuté sur un ordinateur, permet à l'ordinateur de réaliser un procédé selon la revendication 7 ou 8.
